**Europäisches Patentamt**

**European Patent Office**

**Office européen des brevets**

(19)

(11)  **EP 0 637 271 B1**

(12)  **EUROPÄISCHE PATENTSCHRIFT**

(45) Veröffentlichungstag und Bekanntmachung des Hinweises auf die Patenterteilung:
**16.07.1997 Patentblatt 1997/29**

(21) Anmeldenummer: **93908801.9**

(22) Anmeldetag: **21.04.1993**

(51) Int. Cl.$^6$: **B09B 1/00**, G01M 3/02, G01M 3/20, E02D 31/00

(86) Internationale Anmeldenummer:
**PCT/DE93/00345**

(87) Internationale Veröffentlichungsnummer:
**WO 93/22076 (11.11.1993 Gazette 1993/27)**

(54) **ÜBERWACHUNGSEINRICHTUNG FÜR EINE MÜLLDEPONIE UND VERFAHREN ZUR LECKAGEORTUNG**

MONITORING DEVICE FOR A RUBBISH DUMP AND PROCESS FOR LOCATING LEAKS

DISPOSITIF DE SURVEILLANCE POUR DECHARGE ET PROCEDE DE DETECTION DE FUITES

(84) Benannte Vertragsstaaten:
**AT BE CH DE DK ES FR GB IT LI NL**

(30) Priorität: **24.04.1992 DE 4213585**

(43) Veröffentlichungstag der Anmeldung:
**08.02.1995 Patentblatt 1995/06**

(73) Patentinhaber: **SIEMENS AKTIENGESELLSCHAFT 80333 München (DE)**

(72) Erfinder:
- **JAX, Peter D-8520 Erlangen (DE)**
- **RUTHROF, Klaus D-8500 Nürnberg (DE)**

(56) Entgegenhaltungen:
DE-A- 2 431 907          DE-U- 9 107 693
US-A- 5 076 728

## Beschreibung

Die Erfindung bezieht sich auf eine Überwachungseinrichtung für eine Mülldeponie, bei der eine Dichtfolie verwendet wird. Sie bezieht sich auch auf eine besonders günstige Ausführung der Dichtfolie sowie auf ein Verfahren zur Lokalisierung eines Lecks in einer Dichtfolie für eine Mülldeponie. Die Erfindung findet nicht nur Anwendung generell bei der Abdichtung und Überwachung von Abfalldeponien, sondern auch speziell bei der Leckageortung in Industrie-Sondermüll-Lagern.

Aus dem Siemens-Prospekt "Deponie-Langzeitüberwachung mit LEOS", Bestell-Nr. A 19100-U653-A222, Juli 1991, ist eine Einrichtung zum Abdichten einer Müldeponie sowie zur Leckage-Erkennung und -Ortung bekannt. Dabei ist vorgesehen, daß die Mülldeponie mit einer wasserdichten Folie, Dichtungsbahn oder "Abdichtung" (insbesondere aus Kunststoff) versehen ist. Diese Abdichtung kann unterhalb des Mullkörpers angeordnet sein (Basisabdichtung), damit keine Schadstoffe in das Grundwasser gelangen können. Die Abdichtung kann aber auch oberhalb des Müllkörpers verlegt sein (Oberflächenabdichtung), um das Eintreten von Regenwasser und damit das Auswaschen von Schadstoffen aus dem Müll zu verhindern. Um ein Leck, das heißt eine Schadstelle, in dieser Abdichtung frühzeitig zu erkennen, ist bei der bekannten Einrichung die Verlegung von Sensorschläuchen, das heißt von sogenannten LEOS-Schläuchen, vorgesehen, und zwar nur auf der vom Müllkörper abgewandten Seite der Abdichtung. LEOS steht hierbei für "Leckage-Ortungs-System".

Die LEOS-Schläuche, die mäanderförmig verlegt, mit Luft gefüllt und deren Wandungen für verschiedene, in der Deponie vorhandene Stoffe durchlässig sind, sind an ein zentrales Überwachungssystem angeschlossen. Bei einer Plazierung der Abdichtung unterhalb des Müllkörpers wird eine Schadstelle darin durch Detektion von im Sickerwasser gelösten Stoffen lokalisiert. Und bei einer Plazierung der Abdichtung oberhalb des Müllkörpers wird eine Schadstelle darin durch Detektion von aufsteigenden Faulgasen lokalisiert.

Ein LEOS-Schlauch sowie eine Einrichtung, die zu seinem Betrieb dient, sind aus der DE-PS 24 31 907 bekannt. Es handelt sich dabei um einen Schlauch, der für Schadstoffe durchlässig ist. Am einen Ende des Schlauches ist eine Pumpe angeordnet, mit der einzelne Volumina eines Transportmediums, zum Beispiel einzelne Gasvolumina, in zeitlichen Abständen nacheinander durch den Schlauch hindurch befördert werden. Der Schlauch wird auf diese Weise in regelmäßigen zeitlichen Abständen, das heißt mit gleichbleibender Frequenz, jeweils für einige Zeit durchströmt. Am anderen Ende des Schlauches befinden sich für die zu detektierenden Stoffe, insbesondere Schadstoffe, empfindliche Sensoren bder Detektoren. Falls in die Umgebung des Schlauches ein Schadstoff gelangt, dringt dieser Schadstoff in den Schlauch ein; er wird mit dem nächsten Pumpvorgang des Transportmediums zu den Sensoren gebracht. Da das Medium dabei mit einer bekannten Geschwindigkeit strömt, läßt sich aus der Differenz zwischen dem Einschaltzeitpunkt der Pumpe und dem Ansprechzeitpunkt der Sensoren genau der Crt bestimmen, an dem zwischen zwei Druckströmungsvorgängen der Schadstoff in den Schlauch gelangt ist. Außerdem läßt sich die Schadstoffmenge bestimmen.

In dem deutschen Gebrauchsmuster G 91 07 693.5 (GR 91 G 8513 DE) wird ein Element zum Abdichten und Überwachen eines Körpers, insbesondere einer Abfalldeponie, mittels eines Kontrollraums beschrieben. Diesem Element liegt die Erkenntnis zugrunde, daß es sinnvoll ist, einen verstärkten Schutz durch eine Doppelbarriere zu schaffen. Dies ist sowohl bei der Basisabdichtung als auch bei der Oberflächenabdichtung einer Deponie zweckmäßig. Das Element beruht weiter auf der Überlegung, daß es auch sinnvoll ist, die Ausgestaltung so vorzunehmen, daß meßtechnisch zu erfassen ist, ob die eine oder andere Barriere ein Leck aufweist und wo dieses Leck gelegen ist. Das Element umfaßt dazu zwei Abdichtungen bder Dichtfolien, die durch Stützelemente voneinander beabstandet angeordnet sind. Dabei ist mindestens ein Kanal zwischen den Abdichtungen und den Stützelementen gebildet, der eine Eintrittsöffnung und eine Austrittsöffnung für ein Transportmedium, wie zum Beispiel Luft, aufweist. Dieser Kanal ist dabei als permeabler LEOS-Schlauch ausgebildet, oder er beinhaltet einen solchen LEOS-Schlauch. An die Austrittsöffnung ist mindestens ein Sensor, zum Beispiel ein Sensor für Flüssigkeitsdampf und ein Sensor für Gas, anschließbar. Die beiden Abdichtungen sind unter Freilassung der Eintritts- und Austrittsöffnungen des Kanals an ihren Rändern dicht miteinander verbunden, so daß der Kontrollraum gebildet wird. Die Stützelemente bestehen aus einem strömungsdurchlässigen, aber strömungsbehindernden (weitgehend homogenen) Material. Der Schlauch kann von einem Füllmaterial umgeben sein, das Feuchte zurückhält, also von einem Trockenmittel.

Wesentlicher Bestandteil ist also bei der letztgenannten Überwachungseinrichtung ein Kontrollraum, in den (für den nachzuweisenden Schadstoff permeable) Überwachungskanäle oder Sensorschläuche eingebracht sind, deren Inhalt in regelmäßigen Zeitabständen in Richtung auf den angeschlossenen Detektor gespült wird. Der Kontrollraum besteht aus allseitig geschlossenen Wänden, die bevorzugt von Polyäthylen-Bahnen oder -Folien gebildet werden. Er ist vakuumdicht.

Es zeigt sich nun, daß ein solcher Kontrollraum in Kunststofftechnik nur mit großem Aufwand auch auf steile bder gar senkrechte Wandbereiche einer Müldeponie angewendet werden kann. Solche senkrechten Wandbereiche gibt es zum Beispiel bei Industrie-Sondermüll-Lagern, die unter Verwendung von Beton-Wannen gebaut werden. Infolge thermischer Spannungen des Betons beim Aushärten gibt es unter Umständen Schrumpfrisse im Beton, was wiederum zu Rissen in der anliegenden Polyäthylen-Bahn und damit zu einem Kollabieren der Doppeldichtung führen kann. Außerdem hat sich gezeigt, daß die Bereitstellung von Doppeldichtbahnen recht aufwendig sein kann. Wünschenswert ist eine Lösung, die mit einem geringen Aufwand auskommt.

Aufgabe der Erfindung ist es, eine auf der Verwendung eines Sensorschlauches beruhende Überwachungseinrichtung für eine Mülldeponie, bei der eine Dichtfolie verwendet wird, anzugeben, die mit einem geringeren Aufwand auskommt als im Stand der Technik. Weiterhin soll ein relativ einfach durchführbares Verfahren zur Leckageortung in der Dichtfolie angegeben werden.

Die Erfindung beruht auf der Überlegung, daß man zur Lösung dieser Aufgabe ohne einen abgeschlossenen Kontrollraum und mit nur einer einzigen, also einlagigen Dichtfolie auskommt.

Die hier zur Lösung der genannten Aufgabe bereitgestellte Überwachungseinrichtung ist erfindungsgemäß ausgerüstet

- mit einer Dichtfolie,
- mit einem ersten Sensorschlauch, der auf der einen Seite der Dichtfolie verlegt ist,
- mit einem zweiten Sensorschlauch, der auf der anderen Seite der Dichtfolie verlegt ist, wobei mindestens ein Teilstück des zweiten Sensorschlauches parallel zu einem Teilstück des ersten Sensorschlauches verläuft,
- mit mindestens einer Pumpe zum Beaufschlagen des ersten und zweiten Sensorschlauches mit einem Transportmedium,
- mit mindestens einem Detektor zur Abgabe eines ersten und zweiten Nachweissignals für den Nachweis eines Stoffes im Transportmedium, das durch den ersten bzw. zweiten Sensorschlauch gefördert wird, und
- mit Mitteln zur ortsgerechten Verknüpfung des Nachweissignals des ersten Sensorschlauches mit dem Nachweissignal des zweiten Sensorschlauches.

Der erste und der zweite Sensorschlauch können dabei prinzipiell in gleicher Richtung oder aber in Gegenrichtung vom spülenden Transportmedium durchströmt sein. Dabei kann für die beiden Sensorschläuche entweder ein gemeinsames Betreiber- und Nachweissystem vorgesehen sein; oder aber es können jeweils getrennte Betreiber- und Nachweissysteme vorgesehen sein. Im ersten Fall ist die Überwachungseinrichtung dann insbesondere dadurch gekennzeichnet, daß eine Verbindung zwischen dem Ausgang des ersten Sensorschlauches und dem Eingang des zweiten Sensorschlauches vorgesehen ist, und daß zur Abgabe des Nachweissignals des ersten Sensorschlauches und zur Abgabe des Nachweissignals des zweiten Sensorschlauches ein gemeinsamer Detektor vorgesehen ist, der an den Ausgang des zweiten Sensorschlauches angeschlossen ist.

Und im zweiten Fall ist die Überwachungseinrichtung dann insbesondere dadurch gekennzeichnet, daß für den ersten Sensorschlauch eine eigene Pumpe und ein eigener Detektor und daß für den zweiten Sensorschlauch ebenfalls eine eigene Pumpe und ein eigener Detektor vorgesehen sind.

Die beiden Sensorschläuche sind bevorzugt jeweils in einer Ebene angeordnet oder aber im Raum mäanderförmig verlegt.

Eine Dichtfolie für die Überwachungseinrichtung einer Mülldeponie zeichnet sich erfindungsgemäß dadurch aus, daß Mittel vorgesehen sind, die das Teilstück des ersten Sensorschlauches parallel zum Teilstück des zweiten Sensorschlauches halten.

Die genannte Aufgabe wird bezüglich des Verfahrens zur Lokalisierung eins Lecks in einer Dichtfolie, die in einer Mülldeponie eingesetzt wird, erfindungsgemäß dadurch gelöst, daß in regelmäßigen Zeitabständen ein Transportmedium durch einen ersten Sensorschlauch, der auf der einen Seite der Dichtfolie verlegt ist, und durch einen zweiten Sensorschlauch, der parallel dazu auf der anderen Seite der Dichtfolie verlegt ist, hindurchgeleitet wird, daß die aus dem ersten und dem zweiten Sensorschlauch entfernten Stoffe durch Nachweissignale gemessen werden, daß das Nachweissignal des ersten Sensorschlauches mit dem Nachweissignal des zweiten Sensorschlauches ortsgerecht verknüpft wird, und daß das verknüpfte Signal angezeigt wird. Bevorzugt werden bei der Verknüpfung die beiden Nachweissignale ortsgerecht voneinander substrahiert.

Man kann das Grundprinzip der vorliegenden Erfindung am folgenden Beispiel recht einfach erkennen: Beidseitig der Dichtfolie wird mit Hilfe von weitgehend parallel zueinander angeordneten und schadstoff-permeablen Sensorschläuchen die LEOS-Technik, also die an sich bekannte "Schnüffeltechnik", angewandt. Dabei wird der Unterschied der Konzentration beidseits der Dichtfolie als Funktion der "Schlauch-Aufsichtsposition", das heißt als Funktion des Strömungsweges, bestimmt und dargestellt. Eine Leckstelle markiert sich in dieser Darstellung deutlich als Extremwert, und zwar unabhängig von etwa oberhalb der (z. B. horizontal angeordneten) Dichtfolie vorhandenen Konzentrationshäufungen infolge von Altlasten, die sich zum Beispiel im Beton festgesetzt haben.

Die Vorteile der Erfindung lassen sich wie folgt zusammenfassen: Die beschriebene Einrichtung und das Verfahren erfordern keinen vakuumdichten Kontrollraum. Die geschilderte Methode ist unabhängig von lokal schwankenden Sondermüll-Konzentrationen oberhalb der Dichtfolie bei Industrieflächen; bei Deponie-Oberflächenabdichtungen verhält es sich umgekehrt. Es ist nur eine einlagige Dichtfolie erforderlich, was gegenüber der bekannten Doppel-Abdichtfolie erhebliche Einsparungen bedeutet. Die Methode mißt direkt bei der Konzentrations-Differenz-Bildung die "Sperrfunktion der Dichtfolie"; das heißt die Konzentrations-Differenz ist an jedem Meßort ein Maß für die Güte der dort vorhandenen (eventuell dort stark beanspruchten) Dichtfolie. Im Gegensatz zu der bekannten Methode mit Doppel-Abdichtfolie sind auch keine komplexen Durchführungen zwischen der Polyäthylen-Folie und dem LEOS-Schlauch erforderlich; dies liegt daran, daß vorliegend die zu überwachende Gesamtoberfläche nicht in Segmente unterteilt werden muß, die eine gegenseitige Abdichtung erfordern.

Ausführungsbeispiele der Erfindung werden im folgenden anhand der Zeichnung näher erläutert. Für gleiche Elemente werden dieselben Bezugszeichen verwendet. Es zeigen:

Figur 1 im Schnitt eine Polyäthylen-Dichtfolie, an der beidseitig je ein Sensorschlauch bekannter Konfiguration angeordnet ist, wobei die Dichtfolie in einer Betonkonstruktion untergebracht ist;

Figur 2 im Schnitt eine ebensolche Dichtfolie, die im gesamten Wannenbereich einer Deponie angeordnet ist;

Figur 3 einen Blick von oben auf eine Dichtfolie mit zwei in Gegenrichtung vom Transportmedium durchströmten Sensorschläuchen;

Figur 4 einen Blick von oben auf eine Dichtfolie mit zwei in gleicher Richtung durchströmten Sensorschläuchen;

Figur 5 den örtlichen Verlauf der Konzentration, der vom Detektor und einem Rechner in einer Überwachungseinrichtung gemäß Figur 4 ermittelt wird;

Figur 6 das daraus ermittelte positive Differenzsignal;

Figur 7 alternativ das daraus ermittelte negative Differenzsignal;

Figur 8 einen Blick auf eine im wesentlichen vertikal angeordnete Dichtfolie mit Sensorschläuchen;

Figur 9 eine räumlich mäanderförmige Konfiguration der Sensorschläuche;

Figur 10 eine Mülldeponie mit Boden- und Seitenauskleidung durch eine durchgehende Dichtfolie;

Figur 11 eine Mülldeponie mit Bbden-, Seiten- und Randauskleidung mittels einer durchgehenden Dichtfolie; und

Figur 12 eine Parallelhaltevorrichtung für die Schlauchteilstücke.

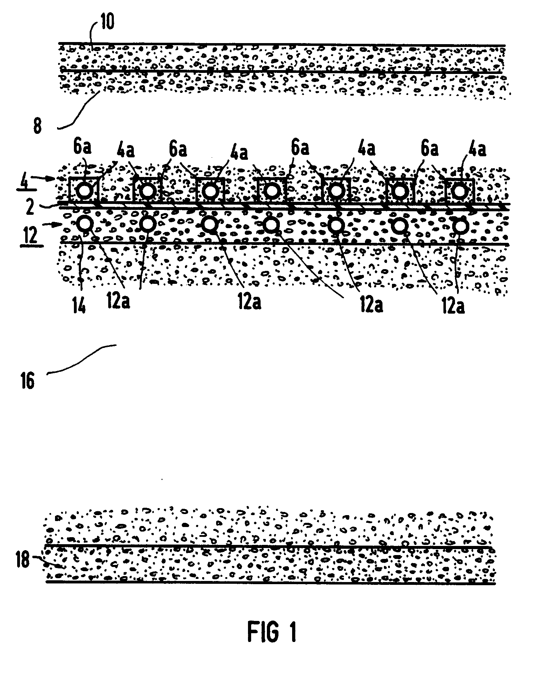

Figur 1 zeigt den mechanischen Teil einer Überwachungseinrichtung, die für eine Mülldeponie, insbesondere für eine Industrie-Sondermüll-Anlage, vorgesehen ist. Kernstück ist eine Kunststoff-Dichtfolie 2, die bevorzugt aus Polyäthylen besteht und in einer horizontalen Ebene verlegt ist. Auf der oberen Seite der Dichtfolie 2 ist ein erster permeabler Sensorschlauch 4 mäanderförmig verlegt. Die einzelnen Teilstücke dieses ersten Sensorschlauches 4 sind mit 4a bezeichnet. Sie sind in parallel zueinander verlaufenden, horizontal angeordneten Schutz-Sammel-Kanälen 6a untergebracht. Diese Kanäle 6a werden durch eine Schutzbetonschicht 8 gebildet, oberhalb der noch eine Schicht 10 aus Vakuumbeton, der mit Korundeinstreuung geglättet sein kann, aufgebracht ist. Auf der unteren Seite der Dichtfolie 2 befindet sich ein zweiter permeabler Sensorschlauch 12, der ebenfalls mäanderförmig verlegt ist und dessen Teilstücke mit 12a bezeichnet sind. Die Teilstücke 12a des zweiten Sensorschlauches 12 verlaufen jeweils parallel zu einem Teilstück 4a des ersten Sensorschlauches 4. Ebenso wie der erste Sensorschlauch 4 ist auch der zweite Sensorschlauch 12 für zu überwachende Schadstoffe permeabel. Er besteht insbesondere ebenfalls aus Polyäthylen. Bei beiden Sensorschläuchen 4, 12 handelt es sich also um die bereits erwähnten LEOS-Schläuche. Ihr Abstand zur Dichtfolie 2 ist nur gering und beträgt zum Beispiel zwischen 0,5 und 2 Schlauchdurchmessern.

Im Gegensatz zum ersten Sensorschlauch 4 ist der zweite Sensorschlauch 12 nicht in Schutz-Sammel-Kanälen 6a, sondern in einer Feinkiesschicht 14 untergebracht. Diese Feinkiesschicht 14 ist auf einem Fundament 16 aus Beton gelagert. Das Fundament 16 kann wiederum nach unten hin durch eine Magerbetonschicht 18 abschließen.

Abweichend davon können der erste und zweite Schlauch 4 bzw. 12 in gleicher Weise entweder in Beton-Schutzkanälen oder aber im Feinkies verlegt sein.

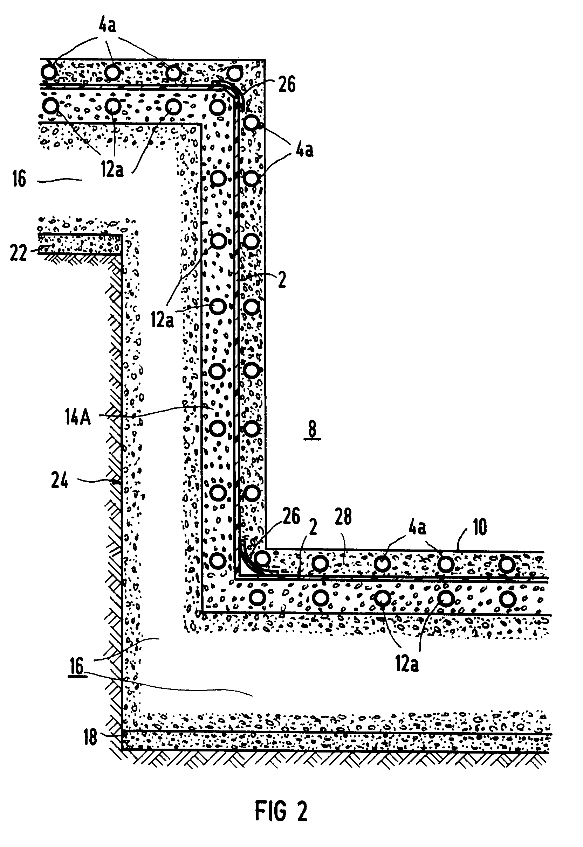

Figur 2 zeigt den linken Rand einer Wanne mit senkrechten Wänden, die im Erdreich 20 ausgebildet ist. Der Boden und der Randbereich sind jeweils mit einer Magerbetonschicht 18 bzw. 22 belegt. Hierauf befindet sich ein Betonfundament 16, das zwischen Boden- und Randbereich eine senkrecht aufragende Wand 24 besitzt. Auf dem Fundament 16 ist eine Schutzschicht 14A aufgetragen, die in ihrem gesamten Bereich oder in einem Teilbereich parallele Teilstücke 12a eines zweiten Sensorschlauches 12 enthält. Auf dieser Schutzschicht 14A befindet sich wiederum eine Dichtfolie 2 aus Kunststoff. Bemerkenswert ist, daß sich die einlagige Dichtfolie 2 kontinuierlich vom Boden- über den Wand- bis in den Rand-Bereich erstreckt. An den Ecken können Verstärkungsstücke 26 vorgesehen sein. Auf dieser Dichtfolie 2 wiederum befindet sich eine weitere Schutzschicht 28, in der die parallelen Teilstücke 4a des ersten Sensorschlauches 4 untergebracht sind. Kennzeichnend ist also auch hier wiederum, daß die Teilstücke 4a parallel und eng benachbart zu den Teilstücken 12a verlaufen. Auf der Schutzschicht 28 wiederum ist, analog zu Figur 1, eine Betonschicht 8 angeordnet.

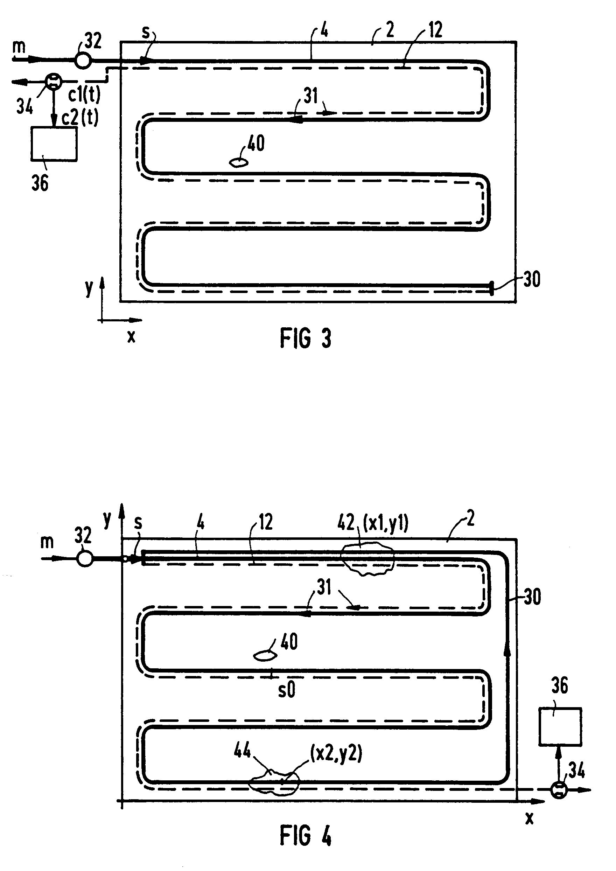

In Figur 3 ist eine gesamte Überwachungseinrichtung für eine Mülldeponie im Prinzip dargestellt. Auf der oberen Seite der Dichtfolie 2 ist wiederum mäanderförmig ein erster Sensorschlauch 4 verlegt. Unmittelbar auf der Unterseite der Dichtfolie 2 ist ebenfalls mäanderförmig ein zweiter Sensorschlauch 12 verlegt. Er liegt parallel zum ersten Sensorschlauch 4. Um dieses in der gezeigten Aufsicht zu verdeutlichen, ist der zweite Sensorschlauch 12 in einem geringen Abstand zum ersten Sensorschlauch 4 gestrichelt eingezeichnet. Bemerkenswert ist, daß das Ende des ersten Sensorschlauches 4 über ein kurzes, im wesentlichen vertikal verlaufendes Verbindungsstück 30 in den Anfang des zweiten Sensorschlauches 12 übergeht. Auf diese Weise können die beiden Sensorschläuche 4, 12 nacheinander und in Gegenrichtung, was durch kleine Pfeile 31 verdeutlicht ist, von einem Transportmedium m in zeitlichen Abständen durchströmt werden. Um dieses zu bewirken, ist am Eingang des ersten Sensorschlauches 4 eine Pumpe 32 vorgesehen. Sie könnte stattdessen auch am Ende des zweiten Sensorschlauches 12 als Saugpumpe angeordnet sein. An diesem Ende befindet sich auch ein Sensor oder Detektor 34, der auf einen oder mehrere der in die Sensorschläuche 4, 12 eindringenden Schadstoffe anspricht. Der Detektor gibt ein erstes Nachweissignal c1 ab, das ein Maß ist für die Konzentration c in Abhängigkeit von der Zeit t eines aus dem ersten Sensorschlauch 4 mittels des Transportmediums m herausgespülten Schadstoffes. Er gibt weiterhin ein zweites Nachweissignal c2 ab, das ein Maß ist für die Konzentration c in Abhängigkeit von der Zeit t des aus dem zweiten Sensorschlauch 12 mittels des Transportmediums m herausgespülten Schadstoffes. Bei der vorliegenden Ausführung wird zunächst das zweite Nachweissignal c2(t) und dann das erste Nachweissignal c1(t) abgegeben.

Diese beiden Nachweissignale c1(t) und c2(t) werden einem Rechner 36 zugeführt, wo das eine Signal zunächst gespeichert wird. Mit Hilfe der (in bekannter Weise gemessenen) Strömungsgeschwindigkeit des Transportmediums m wird im Rechner 36 der Ortsverlauf der Konzentration c entlang der Strömungsstrecke s berechnet, also die Nachweissignale c1(s) und c2(s). Diese beiden Nachweissignale werden im Rechner 36 ortsgerecht miteinander verknüpft, vorzugsweise voneinander subtrahiert, und angezeigt wie später noch deutlich wird. Auch kann hier eine Auswertung erfolgen.

Weil zur Aodichtung der Deponie vorliegend nur eine einzige Dichtfolie 2 erforderlich ist, ist es relativ einfach, mit zwei parallel angeordneten Sensorschläuchen 4, 12 ein Leck 40 in der Dichtfolie 2 zu lokalisieren.

Bei der Ausführungsform nach Figur 3 war nur eine relativ kurze Verbindung 30 verwendet worden, um die beiden Sensorschläuche 4, 12 durch die Dichtfolie 2 hindurch miteinander zu verbinden. Das führt dazu, daß das Transportmedium m in Gegenrichtung durch die beiden Sensorschläuche 4, 12 strömt. Mit einem längeren Verbindungsstück 30 gemär Figur 4 erreicht man, daß Anfang und Ende des zweiten Sensorschlauches 12 vertauscht und die beiden Sensorschläuche 4, 12 in gleicher Richtung durchströmt werden. Dies ist wiederum durch kleine Pfeile 31 verdeutlicht. Im Prinzip zeigt die Überwachungseinrichtung nach Figur 4 sonst denselben Aufbau wie diejenige von Figur 3. In beiden Fällen kann die Dichtfolie 2 statt horizontal auch vertikal oder schräg im Raum angeordnet sein.

Es soll noch erwähnt werden, daß bei der Ausführungsform nach Figur 4 die Verbindung 30 in der Regel nicht als Sensorschlauch, sondern als nicht-permeabler Schlauch ausgeführt wird. Sie kann auch weitgehend außerhalb der Dichtfolie 30 angeordnet sein.

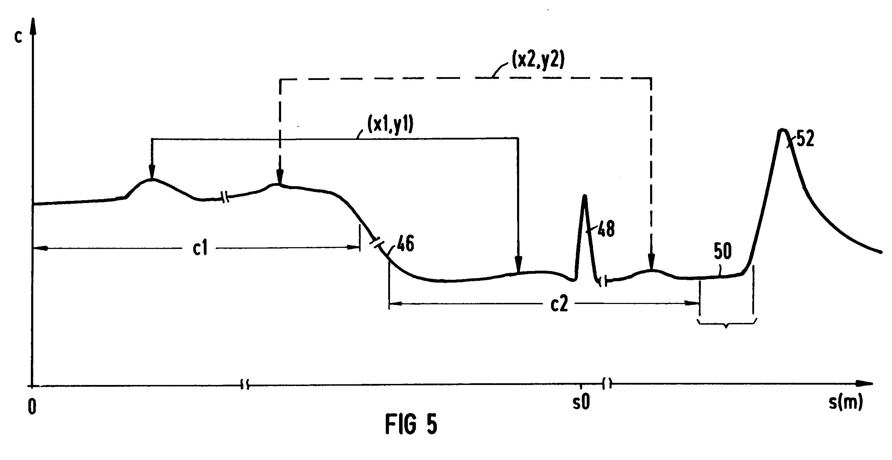

Anhand der Ausführungsform von Figur 4 soll ein typisches Signaldiagramm erläutert werden, das in Figur 5 dargestellt ist. Dabei ist davon ausgegangen, daß nicht nur ein Leck 40 vorliegt, sondern auch eine erste Stelle 42 hoher Konzentration von Schadstoffen an einer Stelle $(x1, y1) = s1$ und eine zweite Stelle 44 ebenfalls hoher Konzentration der Schadstoffe an einer Stelle $(x2, y2) = s2$. Beide Stellen 42, 44 liegen oberhalb der Dichtfolie 2.

Im Signaldiagramm von Figur 5 ist die vom Rechner 36 mit Hilfe der Strömungsgeschwindigkeit bestimmte Konzentration c in Abhängigkeit vom Strömungsweg s, der in Metern gemessen wird, dargestellt. An der Stelle $s = 0$ beginnt das erste Nachweissignal c1, das von der Vorlaufleitung oder vom ersten Sensorschlauch 4 herrührt. An den Stellen erhöhter Konzentration infolge der Konzentrationsstellen 42, 44 sind leichte Maxima im Kurvenverlauf erkennbar. Es schließt sich dann ein Übergangsverlauf 46 an, der durch das Spülen der Verbindung 30 bedingt ist. Anschließend ist als zweites Nachweissignal c2 der Konzentrationsverlauf erkennbar, der durch die Rücklaufleitung oder den zweiten Sensorschlauch 12 zustandekommt. In diesem Verlauf befindet sich wiederum an den Orten (x1, y1) und (x2, y2), also an den Orten höherer Konzentration, wiederum jeweils ein leichtes Maximum. Dazwischen ist deutlich ein herausgehobener Extremwert 48 erkennbar, der die Leckstelle 40 charakterisiert. Dieses Maximum 48 befindet sich an der Stelle $s_o$, die durch die Überwachungseinrichtung zu bestimmen ist. An den Kurvenverlauf c2(s) schließt sich nach einer weiteren Übergangsstrecke 50 ein Endmaximum 52 an. Dieses ist apparativ bedingt.

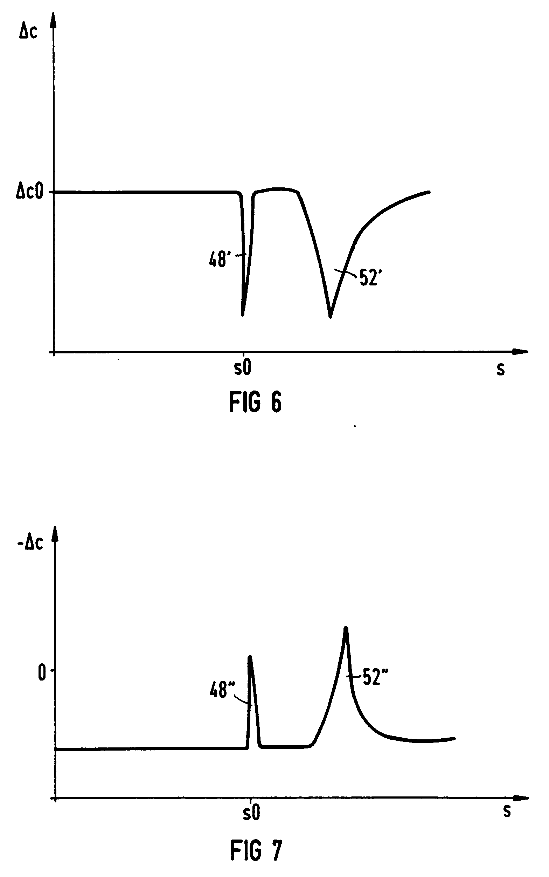

Aus Figur 5 wird also deutlich, daß jedem Punkt s der Dichtfolie 2 entlang der Doppelleitung 4, 12 ein doppelter Konzentrationswert c zugeordnet ist. Subtrahiert man nun Punkt für Punkt entlang des Strömungsweges s die Konzentrationswerte c1 und c2 voneinander, so erhält man - je nach Vorzeichenwahl - entweder den in Figur 6 oder den in Figur 7 gezeigten örtlichen Verlauf des Differenzsignals c. In jedem der beiden Kurvenverläufe ist die identifizierte Leckstelle 48' bzw. 48" an der Stelle $s_o$ deutlich erkennbar.

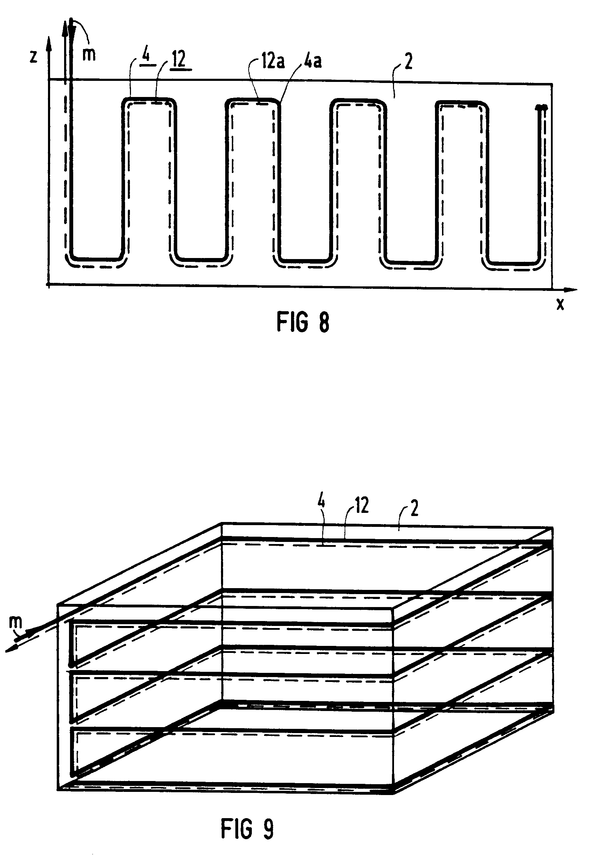

In den Figuren 3 und 4 war zunächst davon ausgegangen, daß man den horizontalen, durch Koordinaten x, y gekennzeichneten Bodenbereich einer Mülldeponie mit einer Dichtfolie 2 versieht und auf Leckstellen 30 überwacht. In Figur 8 ist nunmehr dargestellt, daß dies auch an einer schrägen oder senkrecht stehenden Wand durchgeführt werden kann. Auch hier sind zwei Sensorschläuche 2, 12 parallel zueinander und mäanderförmig beidseitig der Dichtfolie 2 verlegt. Die Dichtfolie 2 spannt hierbei - im Gegensatz zu Figur 6 und 7 - ein Koordinatennetz x, z auf. Hier verlaufen die Teilstücke 4a, 12a, das heißt die langen Leitungsabschnitte des Mäanders, der Sensorschläuche 4 bzw. 12 vertikal oder schräg im Raum.

In Figur 9 ist eine kastenförmige Mülldeponie vorausgesetzt, die einen Bodenbereich und vier im rechten Winkel angeordnete, senkrecht stehende Wände umfaßt. Hier sind die beiden Sensorschläuche 4, 12 räumlich-mäanderförmig beidseits der jeweiligen Wand-Dichtfolie 2 verlegt. Bei der dargestellten Ausführung ist wieder vom Gegenstromprinzip Gebrauch gemacht. Statt dessen kann auch die Gleichströmungsrichtung gewählt werden.

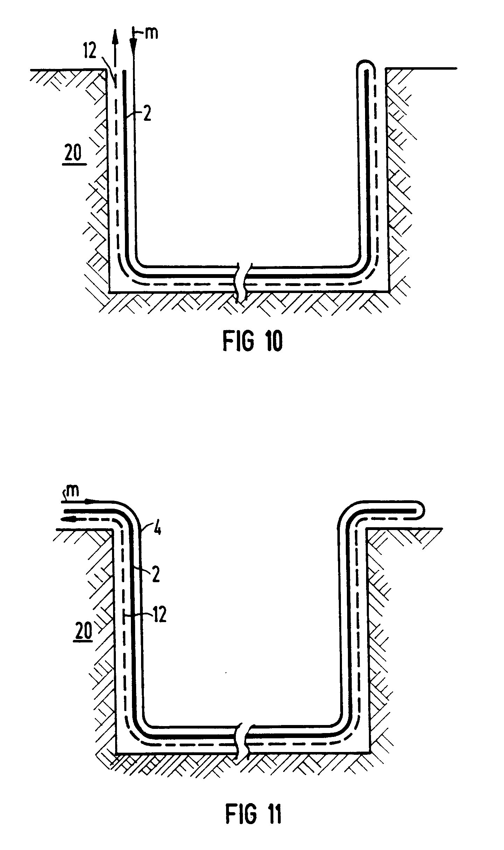

In Figur 10 ist noch einmal eine wannenförmige Mülldeponie im Prinzip gezeigt. Der im Zentrum befindliche Müllkörper ist nicht dargestellt. Hier ist gezeigt, daß der erste Sensorschlauch 4 und der zweite Sensorschlauch 12 an einer Kombination von horizonal und vertikal angeordneten Wänden verlegt sein können. Auch hier kann eine beliebige mäanderförmige Verlegung gewählt werden.

Beim Ausführungsbeispiel nach Figur 11 ist dieses Prinzip noch auf den Randbereich der wannenförmigen Mülldeponie erweitert. Der obere Randbereich ist also hier in die Verlegung mit einbezogen. Und auch hier kann wieder eine beliebige mäanderförmige Verlegung gewählt werden.

Es soll noch hervorgehoben werden, daß die beiden Sensorschläuche 4, 12 bei Beströmung in gleicher oder entgegengesetzter Richtung nicht unbedingt hintereinandergeschaltet zu werden brauchen, wie das bisher in den Figuren dargestellt wurde. Statt dessen ist es auch möglich, für den ersten Sensorschlauch 2 eine eigene Pumpe und einen eigenen Detektor zu verwenden, der das erste Nachweissignal c1 abgibt. Ebenfalls wird für den zweiten Sensorschlauch 12 eine eigene Pumpe und ein eigener Detektor vorgesehen, der das zweite Sensorsignal c2 abgibt. Die ortsgerechte Verknüpfung der beiden Nachweissignale c1, c2 erfolgt dann in der beschriebenen Weise.

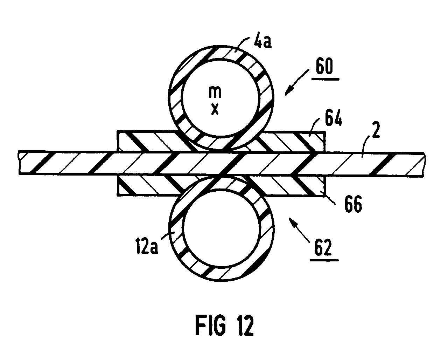

Es war bereits mehrfach erwähnt worden, daß das Teilstück 4a des auf der einen Folienseite angebrachten ersten Sensorschlauches 4 parallel zum Teilstück 12a des auf der anderen Folienseite angebrachten Sensorschlauches 12 gehalten wird. Hierzu sind besondere Mittel erforderlich. Solche Mittel 60 und 62 sind beispielhaft in Figur 12 gezeigt. Diese Mittel 60, 62 zum Parallelhalten der Teilstücke 4a, 12a können in die Dichtfolie 2 integriert sein, beispielsweise in Form von Noppen. Statt dessen können sie auch an ihr befestigt, beispielsweise an ihr verschweißt oder vorzugsweise an ihr verklebt sein. Sie können insbesondere in Form einer Einklemmvorrichtung ausgeführt sein. Nach Figur 12 sind einseitig gerundete, den Schläuchen 4, 12 angepaßte Führungsstücke 64, 66 aus Kunststoff beidseitig der Dichtfolie 2 auf diese aufgeklebt. In den Vertiefungen liegen die Schlauchstücke 4a, 12a parallel zueinander ausgerichtet.

## Patentansprüche

1. Überwachungseinrichtung für eine Mülldeponie

   - mit einer Dichtfolie (2),
   - mit einem ersten Sensorschlauch (4), der auf der einen Seite der Dichtfolie (2) verlegt ist,
   - mit einem zweiten Sensorschlauch (12), der auf der anderen Seite der Dichtfolie (2) verlegt ist, wobei mindestens ein Teilstück (12a) des zweiten Sensorschlauches (12) parallel zu einem Teilstück (4a) des ersten Sensorschlauches (4) verläuft,
   - mit mindestens einer Pumpe (32) zum Beaufschlagen des ersten und zweiten Sensorschlauches (4, 12) mit einem Transportmedium (m),
   - mit mindestens einem Detektor (34) zur Abgabe eines ersten und zweiten Nachweissignals (c1, c2) für den Nachweis eines Stoffes im Transportmedium (m), das durch den ersten bzw. zweiten Sensorschlauch (4, 12) gefördert wird, und
   - mit Mitteln (36) zur ortsgerechten Verknüpfung des Nachweissignals (c1) des ersten Sensorschlauches (4) mit dem Nachweissignal (c2) des zweiten Sensorschlauches (12).

2. Überwachungseinrichtung nach Anspruch 1, **dadurch gekennzeichnet,** daß eine Verbindung (30) zwischen dem Ausgang des ersten Sensorschlauches (4) und dem Eingang des zweiten Sensorschlauches (12) vorgesehen ist, und daß zur Abgabe des Nachweissignals (c1) des ersten Sensorschlauches (4) und zur Abgabe des Nachweissignals (c2) des zweiten Sensorschlauches (12) ein gemeinsamer Detektor (34) vorgesehen ist, der an den Ausgang des zweiten Sensorschlauches (12) angeschlossen ist.

3. Überwachungseinrichtung nach Anspruch 1, **dadurch gekennzeichnet,** daß für den ersten Sensorschlauch (4) eine eigene Pumpe und ein eigener Detektor und daß für den zweiten Sensorschlauch (12) ebenfalls eine eigene Pumpe und ein eigener Detektor vorgesehen sind.

4. Überwachungseinrichtung nach Anspruch 1, 2 oder 3, **dadurch gekennzeichnet,** daß als Mittel (36) zur ortsgerechten Verknüpfung der beiden Nachweissignale (c1, c2) ein Substrahierglied, insbesondere ein Rechner, vorgesehen ist.

5. Überwachungseinrichtung nach einem der Ansprüche 1 bis 4, **dadurch gekennzeichnet,** daß der erste und der zweite Sensorschlauch (4, 12) flächenhaft oder räumlich mäanderförmig und parallel zueinander verlegt sind.

6. Überwachungseinrichtung nach einem der Ansprüche 1 bis 5, **dadurch gekennzeichnet,** daß das Teilstück (4a) des ersten Sensorschlauches (4) und das Teilstück (12a) des zweiten Sensorschlauches (12) in gleicher Richtung vom Transportmedium (m) durchströmbar sind.

7. Überwachungseinrichtung nach einem der Ansprüche 1 bis 5, **dadurch gekennzeichnet,** daß das Teilstück (4a) des ersten Sensorschlauches (4) und das Teilstück (12a) des zweiten Sensorschlauches (12) in Gegenrichtung vom Transportmedium (m) durchströmbar sind.

8. Überwachungseinrichtung nach einem der Ansprüche 1 bis 7, **dadurch gekennzeichnet,** daß die Dichtfolie (2) horizontal, steil ansteigend oder vertikal angeordnet ist und bevorzugt aus einem Kunststoff besteht.

9. Überwachungseinrichtung nach einem der Ansprüche 1 bis 8, **dadurch gekennzeichnet,** daß das erste und das zweite Nachweissignal (c1, c2) die Konzentration (c) des Stoffes im Transportmedium (m) in Abhängigkeit von der Strömungsweglänge (s) beschreibt.

10. Überwachungseinrichtung nach einem der Ansprüche 1 bis 9, **dadurch gekennzeichnet,** daß zumindest der erste oder zweite Sensorschlauch (4, 12) in Beton (8, 16) untergebracht ist.

11. Dichtfolie für eine Überwachungseinrichtung einer Mülldeponie, insbesondere für die Überwachungseinrichtung nach einem der Ansprüche 1 bis 10, **dadurch gekennzeichnet,** daß Mittel (60, 62) vorgesehen sind, die das Teilstück (4a) eines auf der einen Folienseite angebrachten ersten Sensorschlauches (4) parallel zum Teilstück (12a) eines auf der anderen Folienseite angebrachten zweiten Sensorschlauches (12) halten.

12. Dichtfolie nach Anspruch 11, **dadurch gekennzeichnet,** daß die Mittel (60, 62) zum Parallelhalten in sie integriert oder an ihr befestigt, vorzugsweise an ihr verklebt sind.

13. Dichtfolie nach Anspruch 11 oder 12, **dadurch gekennzeichnet,** daß die Mittel (60, 62) zum Parallelhalten eine Einklemmvorrichtung zum Einklemmen des Teilstücks des ersten und/oder zweiten Sensorschlauches (4, 12) umfassen.

14. Dichtfolie nach Anspruch 11, 12 oder 13, **dadurch gekennzeichnet,** daß an ihr der erste und der zweite Sensorschlauch (4, 12) mäanderförmig verlegt ist.

15. Dichtfolie nach einem der Ansprüche 11 bis 14, **dadurch gekennzeichnet,** daß sie wannenförmig ausgebildet ist.

16. Dichtfolie nach Anspruch 15, **dadurch gekennzeichnet,** daß der erste und zweite Sensorschlauch (4, 12) im Bodenbereich, in zumindest einer Wand (24) und/oder im oberen Randbereich der wannenförmigen Ausbildung angeordnet und dort bevorzugt mäanderförmig verlegt ist.

17. Verfahren zur Lokalisierung eines Lecks in einer Dichtfolie, die für eine Mülldeponie vorgesehen ist, wobei in regelmäßigen Zeitabständen ein Transportmedium (m) durch einen ersten Sensorschlauch (4), der auf der einen Seite der Dichtfolie (2) verlegt ist, und durch einen zweiten Sensorschlauch (12), der parallel dazu auf der anderen Seite der Dichtfolie (2) verlegt ist, hindurchgeleitet wird, wobei die dabei aus dem ersten und dem zweiten Sensorschlauch (4, 12) heraustransportierten Stoffe durch ein erstes bzw. zweites Nachweissignal (c1, c2) gemessen werden, wobei das erste Nachweissignal (c1) mit dem zweiten Nachweissignal (c2) ortsgerecht verknüpft wird, und; wobei das verknüpfte Signal ($\Delta$c) angezeigt und/oder ausgewertet wird.

18. Verfahren nach Anspruch 17, **dadurch gekennzeichnet,** daß das erste und zweite Nachweissignal (c1, c2) ortsgerecht voneinander subtrahiert werden.

19. Verfahren nach Anspruch 17 oder 18, **dadurch gekennzeichnet,** daß aus dem verknüpften Signal ($\Delta$c) der Ort ($s_o$) des Lecks (40) in der Dichtfolie (2) ermittelt und angezeigt wird.

20. Verfahren nach einem der Ansprüche 17 bis 19, **dadurch gekennzeichnet,** daß erst das erste und dann das zweite Nachweissignal (c1, c2) in Abhängigkeit von der Zeit (t) gespeichert wird, daß dann daraus ein ortsabhängiges erstes und ein ortsabhängiges zweites Nachweissignal (c1(s), c2(s)) berechnet wird, daß die beiden ortsabhängigen Nachweissignale (c1(s), c2(s)) voneinander subtrahiert werden, und daß ein Extremwert (48', 48") in dem so erhaltenen Subtraktionssignal ($\Delta$s) ortsgerecht angezeigt wird, wobei dieser Extremwert (48', 48") ein Indiz für das Vorhandensein und die örtliche Lage ($s_o$) des Lecks (40) ist.

**Claims**

1. Monitoring device for a rubbish dump

   - having a sealing film (2),
   - having a first sensor hose (4) which is laid on one side of the sealing film (2),
   - having a second sensor hose (12) which is laid on the other side of the dealing film (2), at least one section (12a) of the second sensor hose (12) running parallel to a section (4a) of the first sensor hose (4),
   - having at least one pump (32) for pressurizing the first and second sensor hose (4, 12) with a transport medium (m),
   - having at least one detector (34) for transmitting a first and second indicator signal (c1, c2) to indicate a material in the transport medium (m) which is fed through the first and second sensor hose (4, 12), and
   - having means (36) for the logical combination, according to location, of the indicator signal (c1) from the first sensor hose (4) with the indicator signal (c2) from the second sensor hose (12).

2. Monitoring device according to Claim 1, characterized in that a connection (30) is provided between the output of the first sensor hose (4) and the input of the second sensor hose (12), and in that, for transmitting the indicator signal (c1) from the first sensor hose (4), and for transmitting the indicator signal (c2) from the second sensor hose (12), a common detector (34) is provided which is connected to the output of the second sensor hose (12).

3. Monitoring device according to Claim 1, characterized in that a dedicated pump and a dedicated detector are provided for the first sensor hose (4), and in that, likewise, a dedicated pump and a dedicated detector are provided for the second sensor hose (12).

4. Monitoring device according to Claim 1, 2 or 3, characterized in that a subtraction element, preferably a computer, is provided as means (36) for the logical combination, according to location, of the two indicator signals (c1, c2).

5. Monitoring device according to one of Claims 1 to 4, characterized in that the first and the second sensor hose (4, 12) are laid two-dimensionally or spatially in serpentine fashion and parallel to each other.

6. Monitoring device according to one of Claims 1 to 5, characterized in that the section (4a) of the first sensor hose (4) and the section (12a) of the second sensor hose (12) can be flowed through by the transport medium (m) in the same direction.

7. Monitoring device according to one of Claims 1 to 5, characterized in that the section (4a) of the first sensor hose (4) and the section (12a) of the second sensor hose (12) can be flowed through by the transport medium (m) in the opposite direction.

8. Monitoring device according to one of Claims 1 to 7, characterized in that the sealing film (2) is arranged horizontally, rising steeply or vertically and preferably comprises a synthetic material.

9. Monitoring device according to one of Claims 1 to 8, characterized in that the first and the second indicator signal (c1, c2) describe the concentration (c) of the material in the transport medium (m) as a function of the flow path length (s).

10. Monitoring device according to one of Claims 1 to 9, characterized in that at least the first or second sensor hose (4, 12) is incorporated in concrete (8, 16).

11. Sealing film for a monitoring device of a rubbish dump, particularly for the monitoring device according to one of Claims 1 to 10, characterized in that means (60, 62) are provided which hold the section (4a) of a first sensor hose (4) fitted on one side of the film parallel to the section (12a) of a second sensor hose (12) fitted on the other side of the film.

12. Sealing film according to Claim 11, characterized in that the means (60, 62) for holding parallel are integrated into it or fastened to it, preferably bonded to it.

13. Sealing film according to Claim 11 or 12, characterized in that the means (60, 62) for holding parallel comprise a clamping device for clamping the section of the first and/or second sensor hose (4, 12).

14. Sealing film according to Claim 11, 12 or 13, characterized in that the first and the second sensor hose (4, 12) are laid on it in serpentine fashion.

15. Sealing film according to one of Claims 11 to 14, characterized in that it is designed in a trough shape.

16. Sealing film according to Claim 15, characterized in that the first and second sensor hose (4, 12) are arranged in the bottom region, in at least one wall (24) and/or in the upper edge region of the trough-shaped design and are preferably laid there in serpentine fashion.

17. Process for localizing a leak in a sealing film which is provided for a rubbish dump, wherein a transport medium (m) is led at regular time intervals through a first sensor hose (4), which is laid on one side of the sealing film (2), and through a second sensor hose (12), which is laid parallel thereto on the other side of the sealing film (2), wherein the materials transported out, in so doing, from the first and the second sensor hose (4, 12) are measured by means of a first and second indicator signal (c1, c2), wherein the first indicator signal (c1) is logically combined, according to location, with the second indicator signal (c2), and wherein the logically combined signal ($\Delta c$) is displayed and/or evaluated.

18. Process according to Claim 17, characterized in that the first and second indicator signal (c1, c2) are subtracted from each other according to location.

19. Process according to Claim 17 or 18, characterized in that the location ($s_o$) of the leak (40) in the sealing film (2) is detected from the logically combined signal ($\Delta c$) and displayed.

20. Process according to one of Claims 17 to 19, characterized in that firstly the first and then the second indicator signal (c1, c2) are stored as a function of the time (t), in that then a location-dependent first and a location-dependent second indicator signal (c1(s), c2(s)) are calculated therefrom, in that the two location-dependent indicator signals (c1(s), c2(s)) are subtracted from each other, and in that an extreme value (48', 48") in the subtraction signal ($\Delta s$) thus obtained is displayed according to location, this extreme value (48', 48") being an indication of the presence and the local position ($S_o$) of the leak (40).

**Revendications**

1. Dispositif de surveillance pour décharge comportant :

   - une feuille d'étanchéité (2),
   - un premier tuyau détecteur (4), qui est posé sur l'un des côtés de la feuille d'étanchéité (2),
   - un deuxième tuyau détecteur (12), qui est posé sur l'autre côté de la feuille d'étanchéité (2), au moins un tronçon (12a) du deuxième tuyau détecteur (12) passant parallèlement à un tronçon (4a) du premier tuyau détecteur (4),
   - au moins une pompe (32) destinée à l'alimentation du premier et du deuxième tuyau détecteur (4, 12) avec un milieu de transport (m),
   - au moins un détecteur (34) destiné à la délivrance d'un premier et d'un deuxième signal de décèlement (c1, c2) pour le décèlement d'une substance dans le milieu de transport (m), qui est acheminé par le premier ou le deuxième tuyau détecteur (4, 12), et
   - des moyens (36) destinés à la combinaison adaptée au lieu du signal de décèlement (c1) du premier tuyau détecteur (4) avec le signal de décèlement (c2) du deuxième tuyau détecteur (12).

2. Dispositif de surveillance selon la revendication 1, caractérisé en ce qu'une liaison (30) est prévue entre la sortie du premier tuyau détecteur (4) et l'entrée du deuxième tuyau détecteur (12), et en ce qu'un détecteur (34) commun est prévu pour la délivrance du signal de décèlement (c1) du premier tuyau détecteur (4) et pour la délivrance du signal de décèlement (c2) du deuxième tuyau détecteur (12), qui est raccordé à la sortie du deuxième tuyau détecteur (12).

3. Dispositif de surveillance selon la revendication 1, caractérisé en ce que pour le premier tuyau détecteur (4) une propre pompe et un propre détecteur sont prévus et en ce que pour le deuxième tuyau détecteur (12) une propre pompe et un propre détecteur sont également prévus.

4. Dispositif de surveillance selon la revendication 1, 2 ou 3, caractérisé en ce qu'un élément soustracteur, en particulier un ordinateur, est prévu comme moyen (36) de combinaison adapté au lieu des deux signaux de décèlement (c1, c2).

5. Dispositif de surveillance selon l'une des revendications 1 à 4, caractérisé en ce que le premier et le deuxième tuyau détecteur (4, 12) sont posés en forme de méandres dans l'étendue ou dans l'espace et parallèlement l'un à l'autre.

6. Dispositif de surveillance selon l'une des revendications 1 à 5, caractérisé en ce que le tronçon (4a) du premier tuyau détecteur (4) et le tronçon (12a) du deuxième tuyau détecteur (12) peuvent être traversés par le milieu de transport (m) dans le même sens.

7. Dispositif de surveillance selon l'une des revendications 1 à 5, caractérisé en ce que le tronçon (4a) du premier tuyau détecteur (4) et le tronçon (12a) du deuxième tuyau détecteur (12) peuvent être traversés par le milieu de transport (m) en sens inverse.

8. Dispositif de surveillance selon l'une des revendications 1 à 7, caractérisé en ce que la feuille d'étanchéité (2) est disposée horizontalement, avec une forte inclinaison ou verticalement et se compose de préférence d'une matière synthétique.

9. Dispositif de surveillance selon l'une des revendications 1 à 8, caractérisé en ce que le premier et le deuxième signal de décèlement (c1, c2) décrit la concentration (c) de la substance dans le milieu de transport (m) en fonction de la longueur du parcours d'écoulement (s).

**10.** Dispositif de surveillance selon l'une des revendications 1 à 9, caractérisé en ce qu'au moins le premier ou le deuxième tuyau détecteur (4, 12) est logé dans du béton (8, 16).

**11.** Feuille d'étanchéité pour un dispositif de surveillance d'une décharge, en particulier pour le dispositif de surveillance selon l'une des revendications 1 à 10, caractérisé en ce que des moyens (60, 62) sont prévus, qui maintiennent le tronçon (4a) d'un premier tuyau détecteur (4) placé sur un des côtés de la feuille parallèlement au tronçon (12a) d'un deuxième tuyau détecteur (12) placé sur l'autre côté de la feuille.

**12.** Feuille d'étanchéité selon la revendication 11, caractérisée en ce que les moyens (60, 62) visant au maintien parallèle sont intégrés à elle ou fixés à elle, de préférence collés à elle.

**13.** Feuille d'étanchéité selon la revendication 11 ou 12, caractérisée en ce que les moyens (60, 62) visant au maintien parallèle comprennent un dispositif de serrage afin de serrer le tronçon du premier et / ou du deuxième tuyau détecteur (4, 12).

**14.** Feuille d'étanchéité selon la revendication 11, 12 ou 13, caractérisée en ce que le premier ou le deuxième tuyau détecteur (4, 12) est posé sur elle en forme de méandres.

**15.** Feuille d'étanchéité selon l'une des revendications 11 à 14, caractérisée en ce qu'elle est conçue en forme de cuve.

**16.** Feuille d'étanchéité selon la revendication 15, caractérisée en ce que le premier et le deuxième tuyau détecteur (4, 12) sont disposés dans la zone du fond, dans au moins une paroi (24) et / ou dans la zone marginale supérieure de la configuration en forme de cuve et sont posés là de préférence en forme de méandres.

**17.** Procédé visant à la localisation d'une fuite dans une feuille d'étanchéité, qui est prévue pour une décharge, dans lequel un milieu de transport (m) est conduit à intervalles de temps réguliers à travers un premier tuyau détecteur (4), qui est posé sur l'un des côtés de la feuille d'étanchéité (2), et à travers un deuxième tuyau détecteur (12), qui est posé parallèlement à cela sur l'autre côté de la feuille d'étanchéité (2), les substances alors transportées hors du premier et du deuxième tuyau détecteur (4, 12) étant mesurées par un premier ou un deuxième signal de décèlement (c1, c2), le premier signal de décèlement (c1) étant combiné de façon adaptée au lieu au deuxième signal de décèlement (c2), et le signal ($\Delta$c) étant indiqué et / ou évalué.

**18.** Procédé selon la revendication 17, caractérisé en ce que le premier et le deuxième signal de décèlement (c1, c2) sont soustraits l'un à l'autre de façon adaptée au lieu.

**19.** Procédé selon la revendication 17 ou 18, caractérisé en ce que à partir du signal combiné ($\Delta$c), l'endroit ($S_o$) de la fuite (40) dans la feuille d'étanchéité (2) est déterminé et indiqué.

**20.** Procédé selon l'une des revendications 17 à 19, caractérisé en ce que en premier lieu le premier et ensuite le deuxième signal de décèlement (c1, c2) est mémorisé en fonction du temps (t), en ce qu'ensuite à partir de à est calculé un premier signal de décèlement variable avec le lieu et un deuxième signal de décèlement variable avec le lieu (c1(s), c2(s)), en ce que les deux signaux de décèlement variables avec le lieu (c1(s), c2(s)) sont soustraits l'un à l'autre, et en ce qu'une valeur extrême (48', 48") est indiquée de façon adaptée au lieu dans le signal de soustraction ($\Delta$s) ainsi obtenu, cette valeur extrême (48', 48") étant un indice de la présence et de la position ($s_o$) de la fuite (40).

FIG 1

FIG 2

EP 0 637 271 B1

FIG 3

FIG 4

13

FIG 5

FIG 6

FIG 7

FIG 8

FIG 9

FIG 10

FIG 11

**FIG 12**